# EUROPÄISCHE PATENTANMELDUNG

(11) **EP 0 819 575 A2**
(43) Veröffentlichungstag der Anmeldung: **21.01.1998**
(21) Anmeldenummer: 97111797.3
(22) Anmeldetag: 16.07.1997
(51) Int. Cl.: B60N 3/14

(54) **Beleuchtungseinrichtung für einen elektrischen Zigarrenanzünder**

(30) Priorität: 20.07.1996 DE 29612623 U
(71) Anmelder: Delta Schoeller & Co Elektrotechnische Fabrik GmbH & Co, 60598 Frankfurt (DE)
(72) Erfinder: Hofmann, Dieter, 63739 Aschaffenburg (DE)

(57) **Zusammenfassung**

Die Beleuchtungseinrichtung für einen elektrischen Zigarrenanzünder, insbesondere für Kraftfahrzeuge weist einen als Spannhülse zum Befestigen der Steckdose des Zigarrenanzünders an einem Fahrzeugteil auf. Die Spannhülse ist als Leuchtring ausgebildet, der von einer Lichtquelle beleuchtet wird. Gemäß der Erfindung dient als Lichtquelle für den Leuchtring (1) eine Leuchtdiode (LED) (4), die auf einem Schieber (8) zum Einschieben in das am Leuchtring (1) angeordnete Gehäuse (3) befestigt ist.

## Beschreibung

Die Erfindung betrifft eine Beleuchtungseinrichtung für einen elektrischen Zigarrenanzünder, insbesondere für Kraftfahrzeuge, mit einem als Spannhülse zum Befestigen der Steckdose des Zigarrenanzünders an einem Fahrzeugteil ausgebildeten Leuchtring, der mit einer als Lichtleiter dienenden Lichtleitzunge versehen ist, in die das die Lichtquelle der Beleuchtungseinrichtung aufnehmende Gehäuse materialeinheitlich integriert ist.

Die bekannten Leuchtringe für Zigarrenazünder werden durch eine kleine, am Leuchtring angebrachte Glühlampe beleuchtet. Der Erfindung liegt die Aufgabe zugrunde, die Glühlampe durch eine Energie sparende Lichtquelle zu ersetzen.

Diese Aufgabe wird gemäß der Erfindung auf vorteilhafte Weise dadurch gelöst, daß als Lichtquelle für den Leuchtring eine Leuchtdiode im Gehäuse der Beleuchtungseinrichtung angeordnet wird. In vorteilhafter Weiterbildung der Erfindung kann die Leuchtdiode auf einem Schieber zum Einschieben in das Gehfäuse befestigt werden. Der Schieber kann an seinem vorderen Ende eine schräge Platte mit zwei Bohrungen aufweisen, in die die beiden Anschlußdrähte der Leuchtdiode eingesetzt sind. Die beiden Anschlußdrähte der Leuchtdiode können mit zwei am Schieber befestigten Schleiflontakten zum Anschluß an die Stromquelle (Autobatterie) verbunden sein. Weitere Merkmale der Erfindung können aus den Unteransprüchen 5 bis 7 entnommen werden.

Eine Leuchtdiode hat eine längere Lebensdauer als eine Glühlampe, was den Vorteil hat, daß eine Leuchtdiode nicht so oft ausgewechselt werden muß und dadurch die Wartung der Beleuchtungseinrichtung erleichtert und Arbeitszeit eingespart wird. Ein weiterer Vorteil ist, daß mit einer Leuchtdiode eine bessere Dimmung möglich ist, und zwar auf 1,5 - 2 Volt, während eine Glühlampe bereits ab 5 Volt dunkel bleibt.

In der Zeichnung ist ein Ausführungsbeispiel gemäs der Erfindung dargestellt, und zwar zeigt:

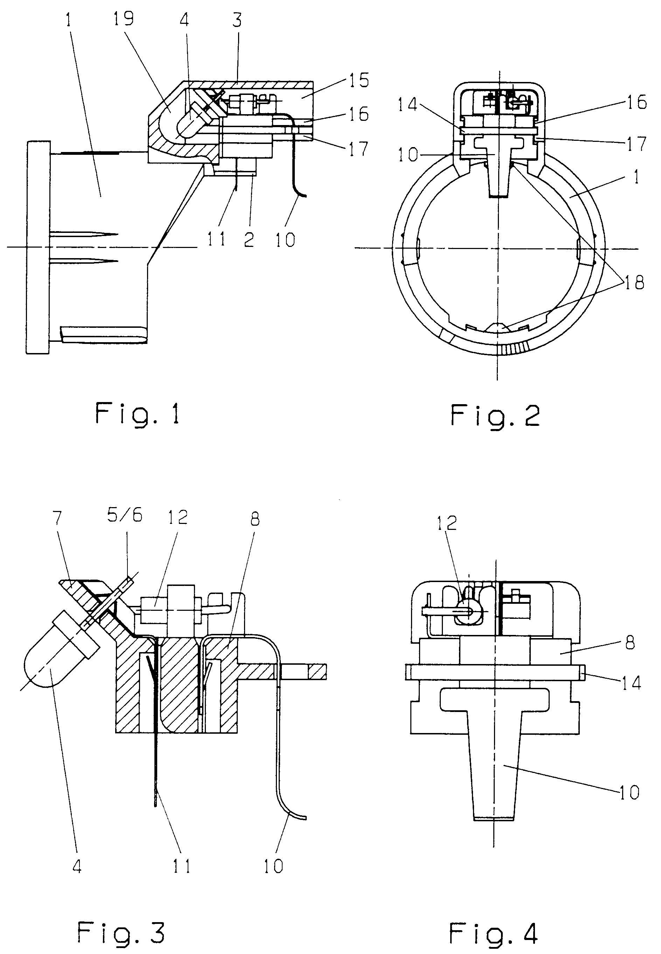

- Fig. 1: eine Seitenansicht des Leuchtringes mit einer Leuchtdiode im Gehäuse der Beleuchtungseinrichtung, wobei das Gehäuse im Schnitt gezeichnet ist,
- Fig. 2: eine Rückansicht des Leuchtringes nach Fig. 1,
- Fig. 3: einen Längsschnitt durch den Schieber,
- Fig. 4: eine Rückansicht des Schiebers nach Fig. 3.

Der zur Aufnahme und zur Befestigung der Steckdose des elektrischen Zigarrenanzünders dienende Leuchtring 1 weist eine Lichtzunge 2 auf, in die das Gehäuse 3 für die Lichtquelle der Beleuchtungseinrichtung integriert ist. Die Leuchtdiode 4 ist mit ihren beiden Anschlußdrähten 5 und 6 in Bohrungen einer schrägen Platte 7 am vorderen Ende des Schiebers 8 eingesetzt und durch Anlöten mit Schleifkontakten 10 und 11 verbunden. Über die Schleifkontakte 10 und 11 erfolgt die Stromversorgung für die Leuchtdiode 4. Der Schleifkontakt 10 liegt an Masse und zwischen dem mit dem +Pol der Stromquelle verbundenen Schleifkontakt 11 und der Leuchtdiode 4 ist ein Vorwiderstand 12 eingeschaltet.

Der Schieber 8 besitzt an seinen Seitenwänden je eine Schiene 14, die beim Einschieben in die hintere Öffnung 15 des Gehäuses 3 zwischen die beiden Führungsschienen 16 und 17 im Innern des Gehäuses 3 gelangen. Im eingeschobenen Zustand rastet der Schieber 8 mit seinem an Masse liegenden Schleifkontakt 10 in eine Vertiefung ein, so daß er festsitzt. Die Leuchtdiode 4 ist derart in einer Auswölbung 19 des Gehäuses 3 angeordnet, daß der von ihr ausgehende Lichtstrahl aus dem Gehäuse 3 in die Lichtleitzunge 2 austritt und von dort in den Leuchtring 1 gelangt. Am Leuchtring 1 sind Federn 18 zum Festklemmen der Steckdose des Zigarrenanzünders, beispielsweise am Armaturenbrett des Kraftfahrzeuges, angebracht.

## Patentansprüche

1. Beleuchtungseinrichtung für einen elektrischen Zigarrenanzünder, insbesondere für Kraftfahrzeuge, mit einem als Spannhülse zum Befestigen der Steckdose des Zigarrenanzünders an einem Fahrzeugteil ausgebildeten Leuchtring, der mit einer als Lichtleiter dienenden Lichtleitzunge versehen ist, in die das die Lichtquelle der Beleuchtungseinrichtung aufnehmende Gehäuse materialeinheitlich integriert ist, dadurch gekennzeichnet, daß als Lichtquelle für den Leuchtring (1) eine Leuchtdiode (LED)(4) in dem Gehäuse (3) angeordnet ist.

2. Beleuchtungseinrichtung nach Anspruch 1, dadurch gekennzeichnet, daß die Leuchtdiode (4) auf einem Schieber (8) zum Einschieben in das Gehäuse (3) befestigt ist.

3. Beleuchtungseinrichtung nach Anspruch 1 oder 2, dadurch gekennzeichnet, daß der Schieber (8) an seinem vorderen Ende eine schräge Platte (7) mit zwei Bohrungen aufweist, in die die beiden Anschlußdrähte (5 und 6) der Leuchtdiode (4) eingeschoben werden.

4. Beleuchtungseinrichtung nach Anspruch 1 bis 3, dadurch gekennzeichnet, daß die Anschlußdrähte (5 und 6) der Leuchtdiode (4) mit zwei am Schieber (8) befestigten Schleifkontakten (10 und 11) zum Anschluß an die Stromquelle (Autobatterie) verbunden sind.

5. Beleuchtungseinrichtung nach Anspruch 1 bis 4, dadurch gekennzeichnet, daß zwischen dem Anschlußdraht für den +Pol und dem zugehörigen Schleifkontakt (10) ein elektrischer Widerstand (12) vorgesehen ist.

6. Beleuchtungseinrichtung nach Anspruch 1 bis 5, dadurch gekennzeichnet, daß der Schieber (8) an zwei gegenüberliegenden Seitenflächen Schienen (14) aufweist, die in Führungsschienen (16 und 17) an den Innenwänden des Gehäuses (3) eingreifen, um ein Verschieben des Schiebers (8) im Gehäuse (3) zu ermöglichen.

7. Beleuchtungseinrichtung nach Anspruch 1 bis 6, dadurch gekennzeichnet, daß sich in der Vorderseite des Gehäuses (3) eine Auswölbung (19) zur Aufnahme der Leuchtdiode (4) befindet, die so gestaltet ist, daß das Licht der Leuchtdiode (4) in die Lichtleitzunge (2) des Leuchtringes (1) eindringen kann.
